Europäisches Patentamt

European Patent Office

Office européen des brevets

(19)

(11) Veröffentlichungsnummer: **0 249 848**
**B1**

# EUROPÄISCHE PATENTSCHRIFT

(12)

(45) Veröffentlichungstag der Patentschrift:
28.02.90

(51) Int. Cl.⁴: **G01P 5/00**

(21) Anmeldenummer: 87108273.1

(22) Anmeldetag: 09.06.87

(54) **System zur Bestimmung der Fluggeschwindigkeit von Hubschraubern.**

(30) Priorität: 14.06.86 DE 3620177

(43) Veröffentlichungstag der Anmeldung:
23.12.87 Patentblatt 87/52

(45) Bekanntmachung des Hinweises auf die Patenterteilung:
28.02.90 Patentblatt 90/9

(84) Benannte Vertragsstaaten:
DE ES FR GB IT NL

(56) Entgegenhaltungen:
EP-A- 0 094 778
EP-A- 0 204 856
GB-A- 2 037 688

(73) Patentinhaber: Deutsche Forschungsanstalt für Luft-
und Raumfahrt e.V., Linder Höhe Postfach 90 60 58,
D-5000 Köln 90(DE)

(72) Erfinder: Müller, Burkhard, Dipl.-Ing., Hainer Weg 150,
D-6000 Frankfurt/Main 70(DE)

(74) Vertreter: Gralfs, Harro, Dipl.-Ing., Am Bürgerpark 8,
D-3300 Braunschweig(DE)

## Beschreibung

Die Erfindung bezieht sich auf ein System zur Bestimmung der Fluggeschwindigkeit von Hubschraubern unter Verwendung der zyklischen und kollektiven Steuerstellungssignale und der Lagewinkel für Nick- und Rollage.

Das breite Einsatzspektrum moderner Hubschrauber erfordert in zunehmendem Maße eine genaue Kenntnisse des aktuellen Flugzustandes, insbesondere der Fluggeschwindigkeit. Die Ermittlung der Fluggeschwindigkeit erweist sich bei Hubschraubern jedoch als schwierig. Da der Flugbereich auch extremen Langsamflug bis hin zum Schwebe- und sogar Rückwärtsflug beinhaltet, versagt hier schon das bei Flugzeugen bewährte Meßprinzip der Differenzdruckmessung als Basis der Geschwindigkeitsbestimmung. Da weiterhin auch außerhalb des Langsamflugbereiches mit Hubschraubern sehr große Gesamt-Anstell- und Schiebewinkel erflogen werden können, reichen starr eingebaute Geschwindigkeitssensoren, wie sie in Flächenflugzeugen verwandt werden, nicht aus. Die Anbringung konventioneller Anstell- und Schiebewinkelmesser wiederum verbietet sich, da es bei Hubschraubern fast unmöglich ist, einen in einem größeren Flugbereich geeigneten Meßort zu finden; denn alle Baugruppen werden vom Haupt- oder Heckrotorstrahl mehr oder weniger stark beeinflußt.

Das große Interesse an einem Fluggeschwindigkeitssystem für Hubschrauber, aber auch die Schwierigkeiten der Geschwindigkeitsbestimmung zeigen sich bereits an der Anzahl und Unterschiedlichkeit der verschiedenen im folgenden vorgestellten Meßmethoden. Sowohl die derzeit gebräuchlichen Sensorsysteme als auch die in der Entwicklung befindlichen indirekten, sog. analytischen Verfahren erfüllen die o.g. Genauigkeitsforderungen nur mit großem Aufwand bzw. nur in bestimmten Flugbereichen, so daß ein verbessertes System wünschenswert erscheint.

Aus den genannten Gründen wurden speziell für den Langsamflug bei Hubschraubern Systeme zur Bestimmung der Fluggeschwindigkeit entwickelt, wobei zwischen verhältnismäßig direkten und rein indirekten Meßmethoden unterschieden werden kann.

Zu den direkteren Methoden zählt z.B. das <u>LORAS</u> - LOw Range Airspeed System. Der Sensor besteht aus zwei an den Enden eines drehbar gelagerten Arms montierten, an einen Differenzdruckgeber angeschlossenen Venturi-Düsen, die von einem Motor getrieben mit 720 U/min. rotieren. Ein typischer Einbauort ist oberhalb des Rotorkopfes.

Die Differenz der Unterdrücke der beiden Venturi-Düsen führt bei Anströmung des Systems senkrecht zur Drehachse während einer Umdrehung zu einem sinusförmigen Signal, dessen Maximalamplitude der Translationsgeschwindigkeit proportional ist und aus dessen Phasenlage der Schiebewinkel bestimmt werden kann. Die Auswertung des Meßsignals nach Betrag und Phase erfolgt in einer Recheneinheit.

Auch zu den direkteren Meßmethoden kann das <u>LASSIE-System</u> - Low AirSpeed Sensing Indication Equipment gezählt werden, eine kardanisch aufgehängte Pitot- und Anströmwinkelsonde mit einem zulässigen Anstellwinkelbereich von $0° \leqslant \alpha \leqslant 360°$ und Schiebewinkelbereich von $-60° \leqslant \beta \leqslant 60°$, die seitlich der Zelle unter dem Hauptrotor an einem Ausleger angebracht wird.

Beim LASSIE sind die Betriebsbereiche Langsamflug und Schnellflug zu unterscheiden. Im Langsamflug befindet sich der Sensor im Rotorabwind. Der Flugwindgeschwindigkeit ist dort die recht hohe Abwindgeschwindigkeit des Rotors überlagert, so daß die Staudrücke gut auflösbar sind. Über die Anströmwinkel $\alpha$, $\beta$ und die entsprechenden trigonometrischen Beziehungen lassen sich die Längs- und Quergeschwindigkeitskomponenten $u_A$ und $v_A$ errechnen. Im Schnellflug liegt der Sensor außerhalb des Rotorabwindes, so daß zusätzlich die Vertikalanströmkomponente $w_A$ bestimmt werden kann.

Während im Schnellflug das Meßprinzip des LASSIE-Systems direkt mit dem entsprechender Sensoren an Flächenflugzeugen verglichen werden kann, wird im Langsamflug von der aus Flugwind und Rotorabwind resultierenden Anströmung auf die Fluggeschwindigkeit geschlossen. Untersuchungen haben gezeigt, daß das LASSIE-System unterschiedliche Genauigkeiten liefert, je nachdem ob der Sensor sich im oder außerhalb des Rotorabwindes befindet. Berücksichtigt man auch Schiebe- und Vertikalflugzustände, ist der Übergangsbereich, in dem sich der LASSIE-Sensor im Bereich der Rotor-Randwirbel befindet und sehr fehlerhafte Resultate liefert, recht groß. Die komplizierten Strömungsverhältnisse am Meßort machen eine umfangreiche Kalibration des LASSIE-Systems erforderlich. Mit den Kalibrationsergebnissen kann dann eine flugzustandsabhängige Fehlerkompensation erfolgen.

Sowohl LORAS als auch das LASSIE-System sind in Serienversionen verfügbar und auf verschiedenen Hubschraubermustern im Einsatz. Neben den z.T. mäßigen Genauigkeiten sind bei beiden Systemen das Gewicht, der komplizierte Aufbau und der hohe Preis nachteilig. Zudem ist die Verwundbarkeit der Systeme groß und Redundanz nur mit erheblichem Aufwand erreichbar.

Alternativ zu den genannten Systemen entstanden in den letzten Jahren Verfahren, bei denen die Fluggeschwindigkeit aus den Meßgrößen Steuerstellungen, Lagewinkel und Drehgeschwindigkeiten berechnet wird: Das VIMI-Verfahren - Vitesse Indiquee par Moyen Internes, das Verfahren nach FAULKNER und LAASH - Litef Analytical Airspeed System for Helicopters -. Ein grundsätzlicher Vorteil dieser Systeme ist die geringe Verwundbarkeit.

Das <u>VIMI-Verfahren</u> basiert auf den Trimmgleichungen des Hubschraubers, die das Gleichgewicht von Gewichts-, Widerstands- und Schubkräften beschreiben. Zur Ermittlung der Fluggeschwindigkeitskomponenten werden die Trimmgleichungen stark vereinfacht und umgeformt: Die Längsgeschwindigkeitskomponente $u_A$ kann dann als Funktion von Längssteuer $\delta_L$ und Nickwinkel $\theta$, die Quergeschwindigkeitskomponente $v_A$ als Funktion von Quersteuer $\delta_Q$ und Rollwinkel $\Phi$ dargestellt werden:

(1)    $u_A = h_1\delta_L + h_2\theta,$

(2)    $v_A = h_3\delta_Q + h_4\Phi.$

Bei der weiterentwickelten Version Super-VIMI werden in den beiden Gleichungen zusätzlich Abhängigkeiten von den Größen Kollektivsteuer $\delta_K$, Flugmasse $m$ und Luftdichte $\rho$ berücksichtigt. Einzelheiten über diese Zusatzterme sind nicht bekannt.

Nach Firmenangaben sind die erreichten Genauigkeiten recht gut. Inwieweit das Verfahren auch bei instationären Flugzuständen und im Vertikalflug seine Gültigkeit hat, wird in den zur Verfügung stehenden Unterlagen nicht geklärt, Genauigkeitseinbußen sind jedoch wahrscheinlich. Es ist weiterhin zu erwarten, daß unruhige Eingangssignale z.B. wegen der großen erforderliche Stellaktivität des Piloten zur Regelung des schwach stabilen Hubschrauberverhaltens die Ergebnisse deutlich verschlechtern. Es wird wird eine Filterung der Steuer-Eingangssignale vorgeschlagen, um die "Selektivität" der entsprechenden Meßgrößen zu verbessern; meist wird durch Filterungen eine wesentliche Verschlechterung des Zeitverhaltens bewirkt.

Untersuchungen haben ferner gezeigt, daß die getrennte Berechnung von Längs- und Quergeschwindigkeit (VIMI) wegen der Verkoppelung der Bewegungsformen des Hubschraubers nicht ausreicht, um in einem größeren Fluggeschwindigkeitsbereich befriedigende Genauigkeiten in der Längs- und Quergeschwindigkeit zu erzielen.

Beim Verfahren nach FAULKNER wird davon ausgegangen, daß die Reaktion des Rotorsystems im unteren Geschwindigkeitsbereich brauchbare Rückschlüsse auf die Fluggeschwindigkeit zuläßt. Die Basis des Verfahrens bildet die Differentialgleichung der Schlagbewegung der Rotorblätter.

Das quasistationäre Differentialgleichungssystem der Schlagbewegung wird gelöst und nach den Längs- und Quergeschwindigkeitskomponenten aufgelöst, also invertiert. Eingangsgrößen in dieses recht hochentwickelte System sind die zyklischen und kollektiven Steuerstellungen, die Drehgeschwindigkeiten und das Rotormast-Moment, mit dessen Hilfe die Schlagkoeffizienten berechnet werden.

Dieses Verfahren erfordert einen sehr guten Einblick in die flugmechanischen und aerodynamischen Verhältnisse des Hubschrauber-Rotors. Um zu Lösungen zu gelangen, sind zusätzlich empiri sche Annahmen zur Rotor-Durchflußberechnung erforderlich. Meßschriebe von Flugversuchen mit dem "FAULKNER"-Verfahrens zeigen eine erfreuliche Übereinstimmung der Längsgeschwindigkeitsverläufe. Die stationäre Genauigkeit in der Quergeschwindigkeit befriedigt nicht voll. Auch hier liegen keine Angaben dazu vor, inwieweit das Verfahren bei Steig- und Sinkflug brauchbar bleibt.

An dieser Stelle sei auf das grundsätzliche Problem der großen Empfindlichkeit gegenüber verrauschten Eingangssignalen bei der Invertierung von Gleichungssystemen hingewiesen. Im vorliegenden Fall sind unter Rauschen auch hochfrequente Stellsignaländerungen zu verstehen. In Meßschrieben zeigt sich dies in den im Vergleich zu den Referenzgeschwindigkeiten aus dem Doppler-System z.T. stark verrauschten geschätzten Fluggeschwindigkeiten.

Das LAASH-Verfahren gilt nur im langsamen Horizontalflug, denn nur unter dieser Voraussetzung existiert bei bekannter Flugmasse ein eineindeutiger Zusammenhang zwischen der Kollektivsteuerstellung und dem Betrag der Fluggeschwindigkeit. In Abhängigkeit vom Betrag der Fluggeschwindigkeit lassen sich bei bekanntem Rollwinkel charakteristische Steuerverläufe über dem Schiebewinkel aufstellen.

Beim LAASH-Verfahren werden mit dem aus dem Kollektivsteuersignal ermittelten Betrag der Fluggeschwindigkeit die für diese Geschwindigkeit geltenden Steuercharakteristika (Zuordnung zyklische Steuer zu Schiebewinkel) aus einer Datei ausgewählt und der Schiebewinkel ermittelt. Sowohl beim Längs- als auch beim Quersteuerverlauf existieren Mehrdeutigkeiten, d.h. es sind verschiedene Schiebewinkelwerte möglich. Wegen der Phasenverschiebung der beiden Steuerverläufe kann durch Vergleich auf den einen zutreffenden Schiebewinkel geschlossen werden.

Die Kollektivsteuerstellungen im Schwebeflugbereich und im Transitionsbereich ($25\text{m/s} \leq V \leq 35\text{m/s}$) haben nur geringe Gradienten über der Fluggeschwindigkeit, womit schon die Ermittlung des Betrags der Fluggeschwindigkeit fehleranfällig wird. Zudem ist gerade im Schwebeflugbereich die Zuordnung der zyklischen Steuerstellungen zum Schiebewinkel stark von der Fluggeschwindigkeit abhängig, so daß insgesamt die Empfindlichkeit auf Meßfehler und Parameteränderungen recht groß ist.

Nachteilig bei diesem Verfahren ist die Mehrdeutigkeit der Kollektivsteuerstellungen über der Fluggeschwindigkeit; so ist z.B. im Schwebeflug und bei ca. 45m/s Fluggeschwindigkeit die gleiche Kollektivsteuerstellung erforderlich. Da das LAASH diese Mehrdeutigkeit nicht berücksichtigt ist eine Vorabschätzung des aktuellen Geschwindigkeitsbereiches erforderlich. Damit ist LAASH an zwei harte Bedingungen geknüpft, die die praktische Verwendbarkeit stark einschränken.

Bei den indirekten (analytischen) Meßverfahren wird also die Fluggeschwindigkeit durch das Ausnutzen flugmechanischer Zusammenhänge ermittelt. Bei allen Verfahren werden nur die stationären bzw. quasistationären Zusammenhänge ausgenutzt. Letztendlich liegen allen Verfahren unvollständige flugmechanische Modelle zugrunde, so daß in Abhängigkeit von den geflogenen Manövern mehr oder weniger heftige Fehler auftreten.

Zusammenfassend kann zu den vorgestellten Systemen und Verfahren folgendes festgestellt werden:

Sämtliche Sensorsysteme werden direkt vom Strömungszustand des Rotors beeinflußt. Die starke Abhängigkeit des Strömungszustands des Rotors von Flugmanövern wirkt sich ungünstig auf die Genauigkeit der Sensorsysteme aus und erfordert z.T. eine flugzustandsabhängige Fehlerkompensation.

Die analytischen Verfahren nutzen die Tatsache aus, daß im Langsamflug große Steueränderungen zu kleinen Geschwindigkeits- und Richtungsänderungen führen. Vorteilhaft bei den analytischen Verfahren ist die geringe Verletzbarkeit, da alle erforderlichen Sensoren in der Zelle untergebracht sind.

Prinzipiell haben analytische Verfahren Vorteile gegenüber gerätetechnischen Lösungen. Die bekannten analytischen Verfahren sind aber sämtlich nur mit Einschränkungen verwendbar: LAASH und das "FAULKNER"-Verfahren gelten nur im Langsam- und Schwebeflug und auch beim VIMI-Verfahren ist zu erwarten, daß die nichtlinearen Verläufe der Steuerausschläge und Lagewinkel über der Fluggeschwindigkeit zu deutlichen Einbußen in der Genauigkeit, wenn nicht gar zum Versagen des Verfahrens führen. Ungünstig ist auch, daß dynamische Flugmanöver zu größeren Fehlern führen können.

Bei keinem der Verfahren wird die Vertikalgeschwindigkeitskomponente (bzw. der Gesamt-Anstellwinkel) bestimmt; die Fluggeschwindigkeit wird also nur unvollständig ermittelt.

Aufgabe der Erfindung ist es, ein im gesamten Fluggeschwindigkeitsbereich des Hubschraubers gültiges System zur Bestimmung der Fluggeschwindigkeit aufzuzeigen, das sowohl bei statischen Flugzuständen als auch bei dynamischen Flugmanövern gilt.

Diese Aufgabe wird gemäß der Erfindung gelöst durch die im Anspruch 1 herausgestellten Merkmale. Zweckmäßige Ausgestaltungen der Erfindung sind in den Unteransprüchen herausgestellt.

Bei der vorliegenden Erfindung wird die Fluggeschwindigkeit mit Hilfe einer verkoppelten Meßeinrichtung bestimmt, die die Steuerstellungen, die Lagewinkel und die Drehgeschwindigkeiten verarbeitet. Wird auch die Bahngeschwindigkeit gemessen und geeignet aufgeschaltet, kann die Genauigkeit bei Flugmanövern gesteigert und die Windgeschwindigkeit bestimmt werden. Eine Anpassung an die atmosphärischen Bedingungen kann über die Meßgrößen Lufttemperatur $T_s$ und Statikdruck $p_s$ erfolgen.

In dem System zur Bestimmung der Fluggeschwindigkeit werden die Meßwerte der Steuerstellungen, des Nick- und Rollwinkels und der Drehgeschwindigkeiten einer Recheneinheit zugeführt. Mit Hilfe der berechneten Fluggeschwindigkeit wird die Anpassung des Systems an den aktuellen Flugzustand (Schnell-, Langsam-, Seitwärts- und Vertikalflug) vorgenommen und unter Verwendung der genannten Meßgrößen werden die drei Fluggeschwindigkeitskomponenten (längs, quer, vertikal) berechnet.

Der Vorteil dieses Systems gegenüber bestehenden Lösungsvorschlägen liegt darin, daß
• alle drei Fluggeschwindigkeitskomponenten bzw. der Betrag der Fluggeschwindigkeit und Anstell- und Schiebewinkel bestimmt werden,
• diese Meßmethode auch bei dynamischen Flugmanövern korrekt funktioniert und nicht nur Mittelwerte liefert,
• aufgrund der internen, klar gegliederten Struktur des Verfahrens Anpassungen an atmosphärische oder konfigurationsbedingte Änderungen einfach und exakt vorgenommen werden können,
• das Berechnungsverfahren an den aktuellen Flugzustand angepaßt werden kann und damit die sich stark mit dem Flugzustand ändernden Gegebenheiten des Hubschraubers gut berücksichtigt werden können.

Die Erfindung ist anhand von Zeichnungen dargestellt und wird im nachstehenden im einzelnen beschrieben.

FIG. 1 zeigt das Blockschaltbild eines Beobachters nach LUENBERGER.
FIG. 2 zeigt schematisch einen Hubschrauber mit seinen Steuerorganen und Sensoren.
FIG. 3 zeigt eine Schaltung zur Signalverarbeitung.
FIG. 4 zeigt eine abgewandelte Ausführung der Schaltung nach Fig. 3.
FIG. 5 zeigt eine weitere Abwandlung der Schaltung nach Fig. 3.

Nach der Theorie von LUENBERGER ist bekannt, daß mit Zustandsbeobachtern aufgrund bekannter (meßbarer) Größen auf unbekannte (nicht meßbare) Zustandsgrößen geschlossen werden kann: Zu einem dynamischen Prozeß mit dem Zustandsvektor $\underline{x}$ und der Modell-Matrix des Systemverhaltens $\underline{A}$ und dem Vektor der Eingangsgrößen $\underline{u}$ und der Modell-Matrix des Eingangsverhaltens $\underline{B}$

$$(3) \qquad \dot{\underline{x}} = \underline{A}\,\underline{x} + \underline{B}\,\underline{u}$$

und mit dem meßbaren Ausgangsvektor

$$(4) \quad \underline{y} = \underline{C}\,\underline{x}$$

wird ein Modell entwickelt und mit den gleichen Eingangsgrößen $\underline{u}$, wie der Prozeß selbst, betrieben.

4

Durch eine Rückführung der Differenz von gemessenen und geschätzten Ausgangsgrößen $\tilde{\underline{y}} = \underline{y} - \hat{\underline{y}}$ und Verstärkung mit $\underline{K}$ kann das Übertragungsverhalten des Beobachters an die spezielle Aufgabenstellung angepaßt werden. Man erhält also das Differentialgleichungs-(DGL-)system des Beobachters:

$$(5) \qquad \dot{\hat{\underline{x}}} = \underline{A}\,\hat{\underline{x}} + \underline{B}\,\underline{u} + \underline{KC}\,(\underline{x} - \hat{\underline{x}}).$$

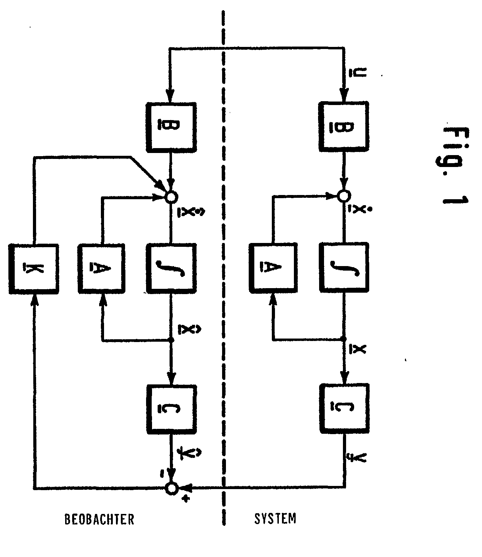

Fig. 1 zeigt das Blockschaltbild eines dynamischen Prozesses mit einem Beobachter nach LUENBERGER.

Aus der Differenz von Gl.(3) und (5) erhält man das DGL-System für den Schätzfehler:

$$(6) \qquad \dot{\tilde{\underline{x}}} = (\underline{A} - \underline{KC})\,\tilde{\underline{x}}.$$

Gl. (6) stellt ein homogenes DGL-System dar, dessen stationäre Lösung der Nullvektor ist, d.h. auch bei nicht mit dem Prozeß identischen Anfangswerten liefert der Beobachter nach dem Abklingen der Anfangsfehler den vollständigen, fehlerfreien Zustandsvektor.

Die Basis eines Beobachters bildet demnach die mathematische Modellierung des Prozeßverhaltens. Der Kern der Erfindung ist ein einfaches, an die physikalischen Gegebenheiten des Hubschraubers leicht anzupassendes dynamisches Modell der Hubschrauberbewegung und die geeignete Berücksichtigung der sich mit dem Flugzustand ändernden Eigenschaften des Hubschraubers im Beobachter.

Da für die vorliegende Aufgabe nur die Bewegung des Hubschrauber-Schwerpunktes gegenüber der Umgebung interessiert, wird das Bewegungsdifferentialgleichungssystem des starren Hubschraubers als Basis der Modellierung betrachtet. Aus den Kraft- und Momentengleichgewichtsbedingungen, dargestellt im hubschrauberfesten Koordinatensystem, ergibt sich das Gleichungssystem:

$$
(7) \qquad
\begin{bmatrix} m\,u_K \\ m\,v_K \\ m\,w_K \end{bmatrix}
= m
\begin{bmatrix} 0 & r & -q \\ -r & 0 & p \\ q & -p & 0 \end{bmatrix}
\begin{bmatrix} u_K \\ v_K \\ w_K \end{bmatrix}
+ mg
\begin{bmatrix} -\sin\theta \\ \sin\Phi\,\cos\theta \\ \cos\Phi\,\cos\theta \end{bmatrix}
+
\begin{bmatrix} X^A \\ Y^A \\ Z^A \end{bmatrix}
$$

$$
\begin{bmatrix} I_x\,p \\ I_y\,q \\ I_z\,r \end{bmatrix}
=
\begin{bmatrix} 0 & r & -q \\ -r & 0 & p \\ q & -p & 0 \end{bmatrix}
\begin{bmatrix} I_x\,p + B_x \\ I_y\,q + B_y \\ I_z\,r + B_z \end{bmatrix}
+
\begin{bmatrix} 0 & -z & y \\ z & 0 & -x \\ -y & x & 0 \end{bmatrix}
\begin{bmatrix} X^A \\ Y^A \\ Z^A \end{bmatrix}
+
\begin{bmatrix} L^A \\ M^A \\ N^A \end{bmatrix}
$$

Das Differentialgleichungssystem (7) beschreibt die Gleichgewichtslagen von Trägheits-, Aerodynamik- und Gewichtskräften und -momenten. Während die Trägheitskräfte und -momente von den inertialen Zustandsgrößen $\underline{V}_K$, $\underline{\Omega}$ und die Gewichtskräfte von den inertialen Lagewinkeln $\Phi$, $\theta$ abhängig sind, ergeben sich die aerodynamischen Kräfte und Momente aus der Relativbewegung des Luftfahrzeugs gegenüber der umgebenden Luft. Unter der Voraussetzung, daß die Abmessungen des Luftfahrzeuges klein sind gegenüber den kürzesten Wellenlängen der Luftbewegungen, gilt die Beziehung

(8)    $\underline{V}_K = \underline{V} + \underline{V}_W$ ,

die besagt, daß sich die Bahngeschwindigkeit $\underline{V}_K$ vektoriell aus der Fluggeschwindigkeit $\underline{V}$ und der Windgeschwindigkeit $\underline{V}_W$ zusammensetzt. Analog gilt auch für die Drehgeschwindigkeiten:

(9)    $\underline{\Omega} = \underline{\Omega}_A + \underline{\Omega}_W$.

Eine annähernd vollständige Berechnung der in Gl.(7) nur allgemein formulierten aerodynamischen Kräfte und Momente ist sehr aufwendig und daher für Aufgabenstellungen wie im vorliegenden Fall nicht praktikabel. Interessiert man sich nur für die Bewegung des als Starrkörper idealisierten Hubschraubers, genügt zur Beschreibung der aerodynamischen Kräfte und Momente eine Reihenentwicklung nach den Zustands- und Stellgrößen. Für die Längskräfte gilt z.B.:

(10)    $X^A = X_u\,u_A + X_v\,v_A + \ldots + X_{\delta L}\,\delta_L + \ldots$

Üblicherweise werden die Kräfte und Momente mit Hilfe der von der Hubschrauberkonfiguration abhängigen Derivativa dargestellt, z.B. ist:

$$(11) \quad X_u = c_{X_u} \, q_{Ro} \, S.$$

$c_{X_u}$ stellt dabei das dimensionslose Längskraftderivativ $dc_X/du_A$ dar, S ist eine Bezugsfläche (bei Hubschraubern meist die Rotorkreisfläche). Der Staudruck $q_{Ro}$ bezieht sich bei Hubschraubern auf die Rotorumfangsgeschwindigkeit $U_{Ro}$, um auch im Schwebeflug sinnvolle Werte zu ermöglichen:

$$(12) \qquad q_{Ro} = \rho_s/2 \; U_{Ro}^2 \, .$$

Die Luftdichte $\rho_s$ kann als Funktion der meßbaren Größen Statikdruck $p_s$ und Lufttemperatur $T_s$ und der speziellen Gaskonstanten der Luft R dargestellt werden:

$$(13) \qquad \rho_s = \frac{p_s}{R \, T_s} \, .$$

Aufgrund des sich z.T. erheblich mit der Fluggeschwindigkeit ändernden Verhaltens des Hubschraubers kann mit dem Ansatz nach (9), (10), (11) und konstanten Derivativen in einem größeren Flugbereich keine befriedigende Beschreibung der aerodynamischen Kräfte und Momente erreicht werden. Um das Verhalten des Hubschraubers in einem größeren Flugbereich zu modellieren, werden für verschiedene Fluggeschwindigkeiten lineare Derivativmodelle verwendet und eine Interpolation zwischen den einzelnen Derivativsätzen vorgenommen. Es wird sozusagen kontinuierlich zwischen den Modellen umgeschaltet. Die aerodynamischen Kräfte und Momente werden also berechnet nach der Vorschrift

$$(14) \qquad \begin{bmatrix} X^A \\ Y^A \\ Z^A \\ L^A \\ M^A \\ N^A \end{bmatrix} = \underline{A}^* \begin{bmatrix} u_A \\ v_A \\ w_A \\ p_A \\ q_A \\ r_A \end{bmatrix} + \underline{B}^* \begin{bmatrix} \delta_L \\ \delta_Q \\ \delta_K \\ \delta_S \end{bmatrix} ,$$

wobei für die aerodynamischen System- und Eingangsmatrizen gilt:

$$(15) \qquad \underline{A}^* = \underline{A}_0^* + u_A \underline{A}_1^* + u_A^2 \underline{A}_2^* + u_A^3 \underline{A}_3^* + \ldots$$

$$(16) \qquad \underline{B}^* = \underline{B}_0^* + u_A \underline{B}_1^* + u_A^2 \underline{B}_2^* + u_A^3 \underline{B}_3^* + \ldots$$

Die Derivativa für die Referenzzustände werden i.a. vom Hersteller des Hubschraubers zur Verfügung gestellt.

Welcher Polynomgrad in Gln.(15,16) sinnvoll ist, hängt von den Gegebenheiten des jeweiligen Hubschraubers ab. Die Verwendung der dritten Potenz der Fluggeschwindigkeit bei der Interpolation in Gln.(15,16) ist i.a. ausreichend. Die Staudruckabhängigkeit hätte zwar bereits mit einem quadratischen Ansatz berücksichtigt werden können, da bei der Rotoranströmung der örtlichen Rotorumfangsgeschwindigkeit die Fluggeschwindigkeit überlagert wird, ist es sinnvoll, einen weiterreichenden Ansatz zu verwenden. Ein kubischer Ansatz gemäß Gln.(15,16) hat sich dabei als außerordentlich zweckmäßig erwiesen.

Werden keine extremen Abweichungen von Längsflugzuständen erflogen, ist es nicht nötig, eine Anpassung der aerodynamischen System- und Eingangsmatrizen z.B. an die Quer- oder Vertikalgeschwindigkeitskomponenten vorzunehmen, da in der näheren Umgebung des aktuellen Betriebspunktes die linearen Ansätze hinreichend genau sind. Sollen auch große Abweichungen von der reinen Längsbewegung mit guter Genauigkeit erfaßt werden, sind auch Ansätze in Analogie zu Gln.(15,16) denkbar, bei denen die Quer- oder Vertikalgeschwindigkeitskomponenten und sogar Kombinationen aller drei Komponenten zur Aktualisierung der Aerodynamik-Matrizen verwendet werden.

Wegen der in den Gln.(11,12) gezeigten Zusammenhänge ist eine Berücksichtigung des aktuellen Atmosphärenzustands wegen der Abhängigkeit der Luftkräfte und Momente von der Luftdichte $\rho_s$ erforderlich. Die "Aerodynamik-Matrizen" $\underline{A}^*$ und $\underline{B}^*$ in Gl.(15) sind, da sich die Derivativa auf die Normalatmosphäre beziehen, noch mit dem Faktor $\rho_s/\rho_n$ zu multiplizieren, so daß mit (13) gilt:

(17) $\quad \underline{A}' = (\rho_s/\rho_n)(T_n/T_s)\,\underline{A}^*,$

(18) $\quad \underline{B}' = (\rho_s/\rho_n)(T_n/T_s)\,\underline{B}^*.$

Die System- und Eingangsmatrizen werden in Gln.(15,16) über die Anströmkomponenten $\hat{u}_A$, $\hat{v}_A$, $\hat{w}_A$ aktualisiert, die als berechnete Werte, nicht als direkt gemessene Größen vorliegen. Damit unterscheidet sich das vorliegende System von konventionellen Ansätzen, bei denen Meßgrößen zur Anpassung des Modells benutzt werden.

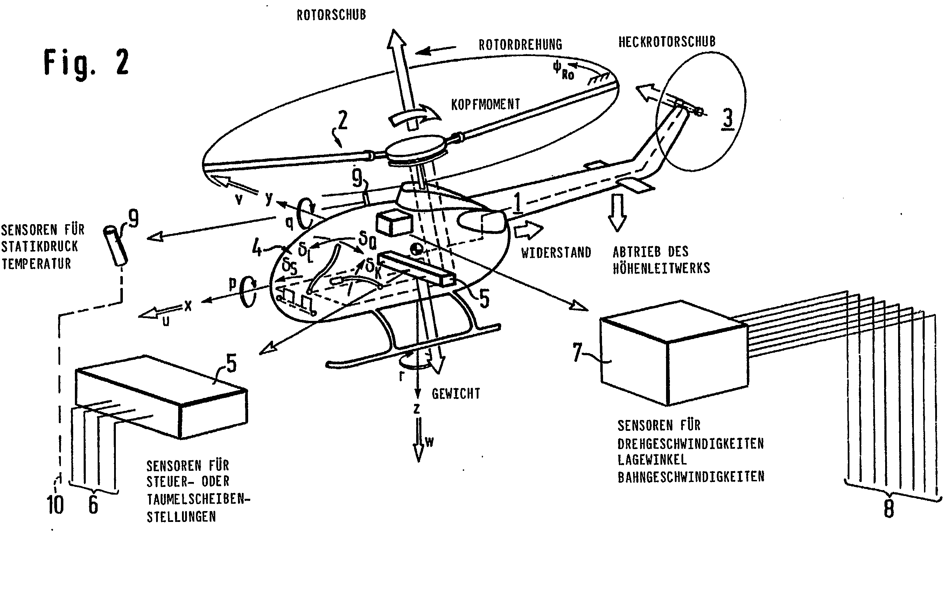

Steht auch der Bahngeschwindigkeitsvektor $\underline{V}_K = [u_K, v_K, w_K]^T$ z.B. als Ausgang eines Doppler-Navigationssystems zur Verfügung, kann die Genauigkeit im Kurvenflug dadurch verbessert werden, daß statt der geschätzten Fluggeschwindigkeit $\hat{\underline{V}}$ die gemessene Bahngeschwindigkeit $\underline{V}_K$ zur Ermittlung der Trägheitskräfte verwendet wird. Fig. 2...5 zeigen das Funktionsprinzip des Systems zur Fahrtbestimmung.

Mit den in den Blockschaltbildern gezeigten Schaltungen wird das Gleichungssystem (7) unter Berücksichtigung von (15,16) nachgebildet. Über die Korrekturglieder werden die Systeme an den Flugzustand des Hubschraubers angekoppelt.

Da meist theoretisch erarbeitete Modelle nicht exakt den realen Gegebenheiten entsprechen, wird im folgenden noch eine Methode vorgestellt, mit deren Hilfe man die stationäre Genauigkeit des Systems zur Fahrtbestimmung steigern und sogar den Berechnungsaufwand des vorgestellten Verfahrens verringern kann.

Bei ausgetrimmten (stationären) Flugzuständen treten keine Beschleunigungen auf, es gilt also:

$$(19) \qquad \dot{\underline{x}} = \underline{A}\,\underline{x}_{Tr.} + \underline{B}\,\underline{u}_{Tr} \overset{!}{=} \underline{0}\,.$$

Soll der Beobachter stationär schätzfehlerfrei arbeiten, müssen auch die Beschleunigungsgrößen des Beobachters verschwinden. Wegen $\underline{x}_{Tr} - \hat{\underline{x}}_{Tr} = \underline{0}$ ergibt sich also:

$$(20) \qquad \dot{\hat{\underline{x}}} = \hat{\underline{A}}\,\hat{\underline{x}}_{Tr} + \hat{\underline{B}}\,\underline{u}_{Tr} \overset{!}{=} \underline{0}\,.$$

Bei Vorhandensein von Modellfehlern, d.h.

$$\hat{\underline{A}} = \underline{A} + \Delta\underline{A} \quad \text{und} \quad \hat{\underline{B}} = \underline{B} + \Delta\underline{B}$$

ist (20) nicht erfüllt. Soll der Beobachter dennoch stationär schätzfehlerfrei arbeiten, ist eine Kompensation der Modellfehler erforderlich, die folgendermaßen erfolgen kann: Man setzt die für ausgetrimmte Flugzustände gültigen Zustands- und Eingangsgrößen, die verhältnismäßig leicht gemessen werden können, in das DGL-System (20) ein und erhält die Beschleunigungsgrößen, die das Einnehmen eines stationären Zustands des Beobachters verhindern:

$$(21) \qquad \underline{f} = \dot{\hat{\underline{x}}} = \Delta\underline{A}\,\underline{x}_{Tr} + \Delta\underline{B}\,\underline{u}_{Tr}\,.$$

Werden diese Beschleunigungsgrößen im DGL-System (20) abgezogen, läßt sich sicherstellen, daß der Beobachter trotz fehlerhafter Modellierung für ausgetrimmte Flugzustände stationär schätzfehlerfrei arbeitet:

$$(22) \qquad \dot{\hat{x}} = \hat{A}\,\hat{x} + \hat{B}\,\underline{u} + \underline{KC}\,(\underline{x} - \hat{x}) - \underline{f}(\hat{x}) \ .$$

Normalerweise wird der Korrekturterm $\underline{f}(\hat{x})$ nicht konstant für alle Zustände sein. Da es aber möglich ist, den "Beobachterfehler" aus Gl.(21) als Funktion geeigneter Zustandsgrößen darzustellen, können mit einem Polynomansatz in Analogie zu Gln.(15,16) gute Näherungen erzielt werden.

Fig. 2 zeigt schematisch einen Hubschrauber 1 mit steuerbarem Hauptrotor 2 und Heckrotor 3. Der Hubschrauber ist mit Steuerorganen 4 zur zyklischen $\delta_L$, $\delta_Q$ und kollektiven $\delta_K$ Hauptrotor-Blattverstellung und zur Heckrotorverstellung $\delta_S$ ausgestattet.

Die Steuerstellungen werden mit geeigneten Sensoren (Weg- oder Winkelaufnehmern) gemessen, die hier als Block 5 dargestellt sind. Die Meßwerte werden als analoge oder digitale elektrische oder Lichtsignale über Leitungen 6 der Signalverarbeitung zugeführt. Auf die Messung und Übertragung der Seitensteuerstellung kann eventuell verzichtet werden. Es ist wichtig, daß die gemessenen Steuerstellungen eine eindeutige Zuordnung zur Position der Rotoransteuerung (Taumelscheibe, "Spinne") ermöglichen. Bei Verwendung von Regeleinrichtungen hat die Messung jeweils nach dem Regler-Eingriff zu erfolgen.

Ebenfalls gemessen werden die Drehgeschwindigkeiten des Hubschraubers um die Längsachse p, um die Querachse q und um die Hochachse r und der Rollwinkel $\Phi$ sowie der Nickwinkel $\Theta$ als Lagewinkel. Zur Steigerung der Genauigkeit bei Flugmanövern mit Drehgeschwindigkeiten (z.B. Kurvenflug) ist die Messung der Bahngeschwindigkeitskomponenten in Hubschrauber-Längsrichtung $u_K$, Querrichtung $v_K$ und Hochrichtung $w_K$ sinnvoll; sie ist aber für das prinzipielle Funktionieren des Verfahrens nicht unbedingt erforderlich. Die Sensoren für die Drehschwindigkeiten und die Lagewinkel sind als Block 7 dargestellt. Ihre Ausgänge werden, gegebenenfalls nachdem sie in geeigneter Weise umgeformt sind, über Leitungen 8 der Signalverarbeitung zugeführt.

Zur Anpassung an atmosphärische Bedingungen und damit zur Genauigkeitssteigerung sind Sensoren 9 für den Statikdruck $p_s$ und die Umgebungstemperatur $T_s$ vorgesehen, deren Ausgänge in Analogie zu den Steuersignalen gewandelt und über Leitungen 10 übertragen werden.

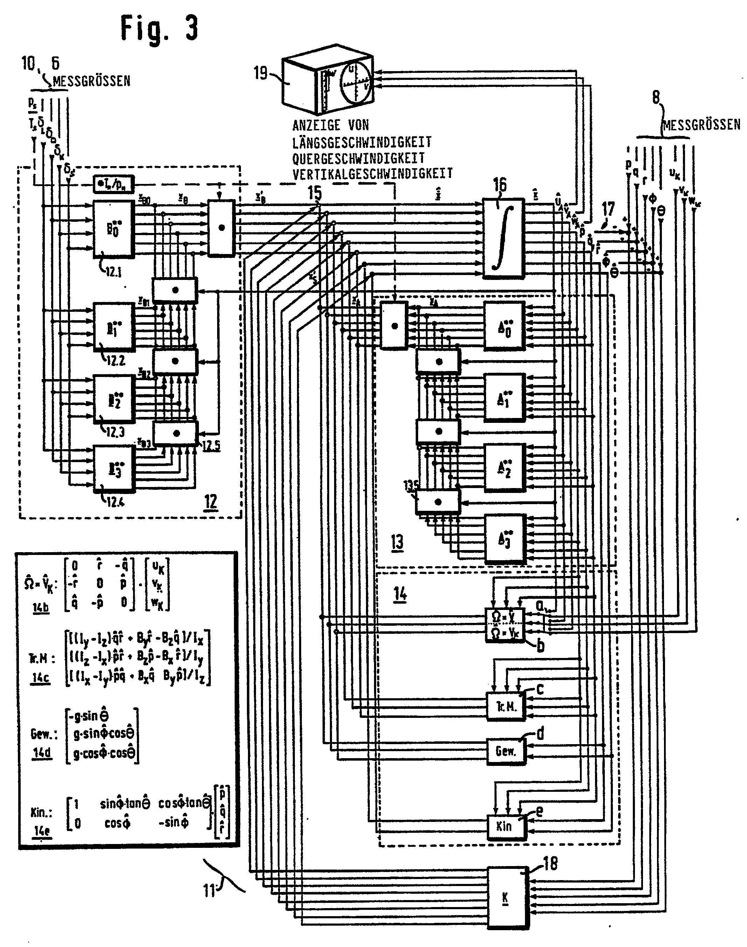

Fig. 3 zeigt eine erste Ausführungsform einer Schaltung zur Signalverarbeitung mit den Eingangsleitungen 6, 8 und 10 für die Meßdaten der Sensoren 5, 7 and 9.

Die Schaltung stellt eine verkoppelte Meßeinrichtung 11 dar, die zwei Modelle beinhaltet, die jeweils durch gestrichelt umrandete Blöcke dargestellt sind. Der Block 12 ist das Modell des Eingangsverhaltens der Fahrzeugbewegung. Die Blöcke 13 und 14 stellen das Modell des Systemverhaltens des Fahrzeuges dar.

Dem Block 12 werden als Eingangsgrößen die zyklischen und kollektiven Steuersignale, ggf. die Signale der Seitensteuerstellung, und zusätzlich die Signale für den Luftdruck $P_s$ und die Umgebungstemperatur $T_s$ aufgegeben. Der Block 12 enthält Verstärkungsmatrizen $\underline{B}_0$ bis $\underline{B}_3$, denen die Eingangssignale aufgegeben werden. In den Matrizen werden diese Signale gemäß folgender Formel verarbeitet, wobei für jeden der sechs Ausgänge $x_{Bij}$ der vier Matrizen gilt.

$$(23) \qquad x_{Bij} = B_{ij1}\delta_L + B_{ij2}\delta_Q + B_{ij3}\delta_K + B_{ij4}\delta_S \qquad \begin{array}{l} (i = 0...3) \\ (j = 1...6) \end{array}$$

Hierin sind $B_{ijk}$ die herstellerseitig gelieferten Derivative des Eingangsverhaltens, die in einem Speicher zur Verfügung stehen. Die Verstärkungsmatrizen $\underline{B}_0$ bis $\underline{B}_3$ enthalten jeweils unterschiedliche Derivative, abhängig von den Flugzuständen.

Die Ausgänge der Matrizen $\underline{B}_0$ bis $\underline{B}_3$ werden gemäß Gleichung 16 unter Verwendung der Multiplikatoren 12.5 miteinander verknüpft und geben den Ausgang des Modells in Form des Ausgangsvektors $\underline{x}_B$.

Die einzelnen Vektorelemente werden dann jeweils mit den Faktoren $p_s/p_n$ und $T_n/T_s$ multipliziert, woraus sich der Ausgangsvektor $\underline{x}'_B$ ergibt.

In Analogie zu den zum Modell im Block 12 gesagten werden im Modell des aerodynamischen Systemverhaltens im Block 13 die geschätzten Zustandsgrößen der Translationsgeschwindigkeiten $\hat{u}_A$, $\hat{v}_A$ und $\hat{w}_A$ und der Drehgeschwindigkeiten $\hat{p}$, $\hat{q}$ und $\hat{r}$ mit den vom Hersteller gelieferten und gespeicherten Verstärkungsmatrizen $\underline{A}_0$ bis $\underline{A}_3$ und den Multiplikatoren 13.5 sowie den Faktoren $p_s/p_n$ und $T_n/T_s$ verknüpft. Sie ergeben den Ausgangsvektor $\underline{x}'_A$ des Blocks 13. Im Block 14 des Modells des Systemverhaltens sind weiter Glieder zur Berücksichtigung des Gewichtes - Glied 14d -, der Trägheitskräfte bzw. -momente - Glied 14c - und der kinematischen Beziehungen - Glied 14e - vorgesehen. Weiter ist in dem Block 14 ein Glied vorgesehen, das der Bestimmung von inertialen Beschleunigungskräften dient und das mit geschätzten Größen - Stellung 14a - oder gemessenen Größen - Stellung 14b - beaufschlagbar ist.

Für die Glieder 14b, c, d und e gelten die in Fig. 3 wiedergegebenen Formeln.

Die Ausgangsgrößen des Blocks 14 werden additiv den Ausgangsgrößen des Blocks 13 hinzugefügt mit Ausnahme der Ausgänge des Blocks 14e der kinematischen Beziehungen. Sämtliche Ausgänge der Blöcke 13 und 14 führen zu dem Ausgangsvektor $\underline{x}'_S$ des Systemverhaltens. Die gemessenen Ausgangsgrößen der Drehgeschwindigkeiten p, q und r und der Lagewinkel $\Phi$ und $\Theta$, die an den Eingängen 8 anstehen, werden an der Stelle 17 mit den geschätzten Zustandsgrößen $\hat{p}$, $\hat{q}$ und $\hat{r}$ und $\hat{\Phi}$ und $\hat{\Theta}$ verglichen und die Differenzen werden auf eine Korrekturmatrix 18 aufgeschaltet, in der Verknüpfungen in Analogie zu der Gleichung (23) erfolgen. Die acht Ausgänge der Korrekturmatrix 18 werden an der Additionsstelle 15 mit den Ausgangsvektoren $\underline{x}'_B$ des Blockes 12 und dem Ausgangsvektor $\underline{x}'_S$ der Blöcke 13 und 14 additiv verknüpft. Der so gebildete Ausgangsvektor

$$\hat{\dot{\underline{x}}}$$

der Summen wird einem Integrierer 16 zugeführt, dessen Ausgang der geschätzte Zustandsvektor $\hat{\underline{x}}$ ist. Von diesem geschätzten Zustandsvektor $\hat{\underline{x}}$ werden die geschätzten Zustandsgrößen der drei Translationsgeschwindigkeiten $\hat{u}_A$, $\hat{v}_a$ und $\hat{w}_A$ einer Anzeigeeinheit 19 zugeleitet.

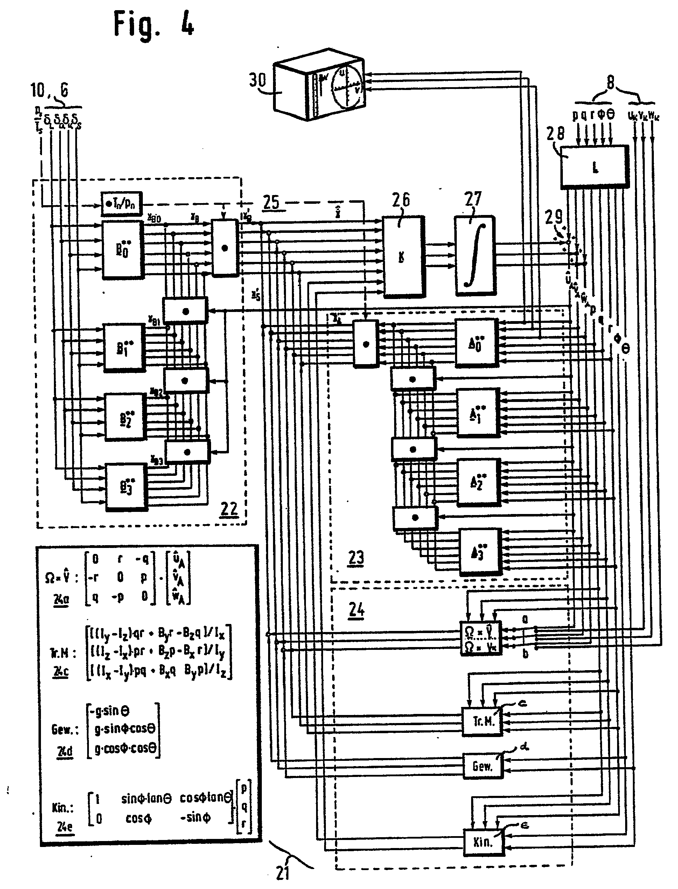

Die Schaltung nach Fig. 4 entspricht weitgehend der Schaltung nach Fig. 3. Abweichend sind die Eingänge des dem Block 13 in Fig. 3 entsprechenden Blockes 23 bzw. des dem Block 14 nach Fig. 3 entsprechenden Blockes 24 mit gemessenen Größen für Drehgeschwindigkeit und Lagewinkel beaufschlagt. Die Ausgangsvektoren $\underline{x}'_B$ und $\underline{x}'_S$ werden ansonsten in gleicher Weise erzielt und in einer Additionsstelle 25 additiv verknüpft.

Die Eingänge 8 für die Drehgeschwindigkeiten und die Lagewinkel werden hier einem ersten Korrekturglied 28 aufgegeben, in dem eine Verknüpfung in Analogie zu Gleichung (23) erfolgt. Die ersten drei Ausgänge des Korrekturgliedes 28 werden mit den hier drei Ausgängen des Integrierers 27 an der Additionsstelle 29 verknüpft und ergeben die geschätzten Fluggeschwindigkeitskomponenten $\hat{u}_A$, $\hat{v}_a$ und $\hat{w}_A$, die den Blöcken 23 und 24 des Modells für das Systemverhalten und gleichzeitig einem Anzeigegerät 30 zugeführt werden.

Die Ausgänge der Additionsstelle 25 und zusätzlich die Ausgangsgrößen für die kinematischen Beziehungen im Ausgangsvektor $\underline{x}'_S$ werden einem zweiten Korrekturglied 26 zugeführt, in dem eine Verknüpfung entsprechend der Gleichung (23) durchgeführt wird. Die drei Ausgänge des Korrekturgliedes 26 werden dem Integrierer 27 aufgegeben.

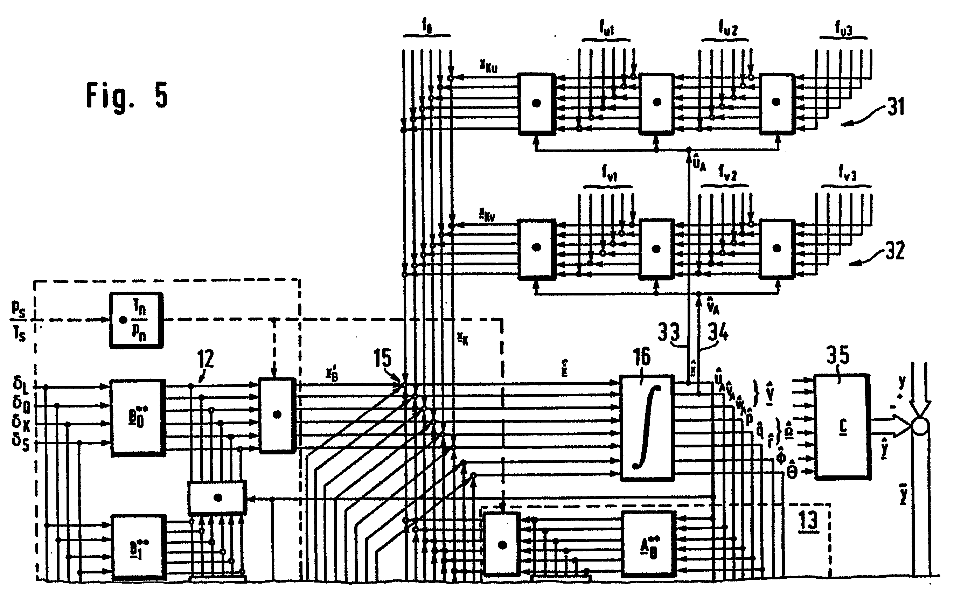

Die Schaltung nach Fig. 5 entspricht in ihrem Grundaufbau der nach Fig. 3. Es ist hier lediglich ein Teil wiedergegeben. Der Schaltung ist hier eine Schaltung 31/32 zur Kompensation stationärer Modellfehler zugefügt. Dieser Schaltung 31/32 werden die geschätzten Werte für die Fluggeschwindigkeitskomponenten $\hat{u}_A$, und $\hat{v}_a$ als Eingangsgrößen zugefügt. Die Ausgänge $\underline{x}_{Ku}$ und $\underline{x}_{Kv}$ der beiden Schaltungszweige 31/32 ergeben sich nach der Formel

$$(24) \qquad \underline{x}_{Ku} = \hat{u}_A \underline{f}_{u1} + \hat{u}_A{}^2 \underline{f}_{u2} + \hat{u}_A{}^3 \underline{f}_{u3} .$$

Diese Formel gilt analog für $\underline{x}_{Kv}$.

Den Ausgangsgrößen $\underline{x}_{Ku}$ und $\underline{x}_{Kv}$, die von den geschätzten Fluggeschwindigkeitskomponenten $\hat{u}_A$, und $\hat{v}_a$ abhängig sind, wird noch ein konstanter Vektor $\underline{f}_0$ hinzugefügt. Die Gesamtsumme $\underline{x}_K$ wird zusätzlich der Additionsstelle 15 aufgegeben. Eine Kompensationsschaltung gemäß Fig. 5 kann auch bei der Schaltung nach Fig. 4 vorgesehen werden. Der Ausgangsvektor $\underline{x}_K$ wird in diesem Fall der Additionsstelle 25 zugefügt.

Die Kompensationsvektoren $\underline{f}_0$, $\underline{f}_{ui}$ und $\underline{f}_{vi}$ werden gemäß dem Verfahren nach den Gleichungen (14) bis (22) ermittelt. Bei den Schaltungen 31 und 32 erfolgt eine dreifache Multiplikation mit den geschätzten Fluggeschwindigkeitskomponenten $\hat{u}_A$, bzw. $\hat{v}_a$. Es können auch Polynome geringeren oder höheren Grades verwendet werden. Dies trifft auch auf die Multiplikationen mit der geschätzten Fluggeschwindigkeitskomponente $\hat{u}_A$ bei den Schaltungen nach den Fig. 3 und 4 zu.

In Fig. 5 ist eine Matrix $\underline{C}$ –Block 35– vorgesehen, die mit den Ausgangsgrößen des Integrierers 16 beaufschlagt ist. Diese Matrix trägt der Tatsache Rechnung, daß nicht alle Zustandsgrößen meßbar sind und daher an der Vergleichsstelle der geschätzten und der gemessenen Ausgangsgrößen $\hat{y}$ und y nur sich entsprechende Größen zum Vergleich zur Verfügung stehen. Der Vektor der Schätzfehler $\tilde{y}$ besteht aus den Differenzen der geschätzten und gemessenen Drehgeschwindigkeiten $\tilde{p}$, $\tilde{q}$, $\tilde{r}$ und der gemessenen und geschätzten Lagewinkeln $\hat{\Phi}$ und $\hat{\Theta}$.

Es sei noch darauf hingewiesen, daß statt der Geschwindigkeitsgröße $\hat{u}_A$ abhängig von den jeweiligen Gegebenheiten auch die Geschwindigkeitsgröße $\hat{v}_a$, aber auch gegebenenfalls gemessene Größen zur Anpassung an den aktuellen Flugzustand als Multiplikator in den Blöcken 12 und 13 bzw. 22, 23 verwendet werden können.

Bei Verwendung der Kompensationsschaltung nach Fig. 5 kann auf die Anpassung der Blöcke 12, 13 bzw. 22, 23 an den Flugzustand durch Multiplikation mit $\hat{u}_A$ unter Umständen verzichtet werden.

Statt der drei Fluggeschwindigkeitskomponenten könnte auch der Betrag der Fluggeschwindigkeit und der Anstell- und Schiebewinkel ermittelt werden.

Mit einem Verfahren analog zur Anpassung an den Translationsflugzustand könnte durch geeignete Verwendung der Drehgeschwindigkeiten oder Lagewinkel auch eine Anpassung an den Kurvenflug vorgenommen werden, die eine Verbesserung der dort erzielten Genauigkeit bewirken würde.

Einen gewissen Nachteil stellt die Tatsache dar, daß Angaben über die Flugmasse und Schwerpunktlage des Hubschraubers dem System zur Bestimmung der Fluggeschwindigkeit vorab mitgeteilt werden müssen: z.B. könnte der Pilot die entsprechenden Zahlenwerte der Recheneinheit über ein Tastenfeld eingeben. Die Flugmasse des Hubschraubers ließe sich jedoch auch folgendermaßen ermitteln: Da eine fehlerhafte Flugmassenangabe zu einer Fehlschätzung der Vertikalgeschwindigkeit führt, kann bei vorhandensein eines Variometers (barometrische Vertikalgeschwindigkeit) über einen Vergleich von gemessener und berechneter Vertikalgeschwindigkeit eine Verstellung des im Beobachter verwendeten Wertes der Flugmasse erfolgen, bis der Vertikalgeschwindigkeitsfehler beseitigt ist. Damit ist dann nicht nur die Modellierung im Beobachter korrekt, sondern steht die berechnete Flugmasse z.B. zur Leistungsberechnung dem Piloten zur Verfügung.

## Bezeichnungen

$\underline{A}$ Systemmatrix
$\underline{A}^*$ Systemmatrix der aerodynamischen Kräfte und Momente
$\underline{A}^{**}$ Systemmatrix der aerodynamischen Kräfte und Momente, auf Masse und Trägheitsmomente normiert
$\Delta\underline{A}$ Modellfehler der Systemmatrix
$\underline{B}$ Eingangsmatrix
$\underline{B}^*$ Eingangsmatrix der aerodynamischen Kräfte und Momente
$\underline{B}^{**}$ Eingangsmatrix der aerodynamischen Kräfte und Momente, auf Masse und Trägheitsmomente normiert
$\Delta\underline{B}$ Modellfehler der Eingangsmatrix
$B_{ijk}$ Koeffizienten der Eingangsmatrix, i=1..3, j=1..6, k=1..4
$\underline{C}$ Ausgangs-(Meß-)matrix
$\underline{I}$ Einheitsmatrix
$I$ Trägheitsmoment
$\underline{K}$ Korrekturmatrix
$L^A$ aerodynamisches Rollmoment
$M^A$ aerodynamisches Nickmoment
$N^A$ aerodynamisches Giermoment
$S$ Bezugsfläche
$T_n$ Bezugstemperatur = 288,15K
$T_s$ Umgebungstemperatur
$U_{Ro}$ Rotor-Umfangsgeschwindigkeit
$\underline{V}$ Fluggeschwindigkeitsvektor $\underline{V}=[u_A,v_A,w_A]^T$
$\underline{V}_K$ Bahngeschwindigkeitsvektor $\underline{V}_K=[u_K,v_K,w_K]^T$
$\underline{V}_W$ Windgeschwindigkeitsvektor $\underline{V}_W=[u_W,v_W,w_W]^T$
$V$ Betrag der Fluggeschwindigkeit
$X^A$ aerodynamische Längskraft
$Y^A$ aerodynamische Querkraft
$Z^A$ aerodynamische Vertikalkraft
$\underline{f}_0$ Korrekturvektor
$\underline{f}_{iu}$ Korrekturvektoren für Längsgeschwindigkeiten
$\underline{f}_{iv}$ Korrekturvektoren für Quergeschwindigkeiten
$h_i$ Verstärkungskoeffizient für VIMI
$m$ Masse
$p_n$ Bezugsdruck = 1013,25hpa
$p_s$ Statikdruck
$p$ Rollgeschwindigkeit
$q$ Nickgeschwindigkeit

$q_{Ro}$ Staudruck an der Rotorblattspitze

r Giergeschwindigkeit

$\underline{u}$ Eingangsvektor $\underline{u} = [\delta_L, \delta_Q, \delta_K \delta_S]^T$

u Längsgeschwindigkeit

v Quergeschwindigkeit

w Vertikalgeschwindigkeit

$\underline{x}$ Zustandsvektor $\underline{x} = [u_A, v_A, w_A, p, q, r, \Phi, \theta]^T$

x Längskoordinate

$\underline{y}$ Ausgangsvektor $\underline{y} = [p, q, r, \Phi, \theta]^T$

y Querkoordinate

z Vertikalkoordinate

$\alpha$ Anstellwinkel

$\beta$ Schiebewinkel

$\delta_K$ Kollektivsteuerstellung

$\delta_L$ Längssteuerstellung (zyklische Steuerstellungen)

$\delta_Q$ Quersteuerstellung (zyklische Steuerstellungen)

$\delta_S$ Seitensteuerstellung (Heckrotor)

$\rho_n$ Luftdichte bei p=1013,25hpa, T=288,15K

$\rho_S$ Luftdichte

$\Phi$ Rollwinkel

$\theta$ Nickwinkel

$\underline{\Omega}$ Drehvektor $\underline{\Omega} = [p, q, r]^T$

$\hat{\ }$ geschätzte Größe

$\sim$ Differenz von gemessener und geschätzter Größe


## Patentansprüche

1. System zur Bestimmung der Fluggeschwindigkeit von Hubschraubern unter Verwendung der zyklischen und kollektiven Steuersignale und der Lagewinkel für Nick- und Rollage, gekennzeichnet durch eine verkoppelte Meßeinrichtung (11;21), der die zyklischen und kollektiven Steuersignale ($\delta_L, \delta_Q, \delta_K$) und die Lagewinkel ($\Phi, \theta$) sowie die Drehgeschwindigkeiten (p,q,r) um die Achsen (x,y,z) des Hubschraubers aufgegeben werden und die zwei Modelle beinhaltet, nämlich

- ein Modell (12;22) des Eingangsverhaltens der Hubschrauberbewegung, auf das die zyklischen und kollektiven Steuersignale (6) als Eingangsgrößen wirken und
- ein Modell (13/14;23/24) des Systemverhaltens des Hubschraubers, auf das die Zustandsgrößen als Eingangsgrößen wirken, durch eine Korrekturanordnung (18;26/28) für die Meßgrößen der Drehgeschwindigkeit und der Lagewinkel,

durch eine Integrationsstufe (16), in der die geschätzten Zustandsgrößen $(\hat{\underline{x}})$ durch Integration der in einer Additionsstelle (15, 25) gebildeten algebraischen Summe

$$\hat{\dot{\underline{x}}}$$

der Ausgangssignale ($\underline{x}'_B, \underline{x}'_S$) der beiden Modelle (12,13/14;22,23/24) und der Ausgangssignale der Korrekturanordnung (18;26) gewonnen werden,

und durch eine Anzeige (19;30) der drei geschätzten Geschwindigkeitskomponenten ($\hat{u}_A$, $\hat{v}_a$ und $\hat{w}_A$), für die die Werte hinter der Integrationsstufe (16;29) entnommen werden.

2. System nach Anspruch 1, dadurch gekennzeichnet, daß die beiden Modelle (12-13/14;22-23/24) über geschätzte Zustandsgrößen an den aktuellen Flugzustand anpaßbar sind.

3. System nach Anspruch 2, dadurch gekennzeichnet, daß wenigstens eine Schaltung zur geschwindigkeitsproportionalen Anpassung der beiden Modelle (12-13;22-23) an den aktuellen Flugzustand vorgesehen ist.

4. System nach Anspruch 3, dadurch gekennzeichnet, daß eine Mehrzahl von parallelen Schaltungen mit Polynomen zweiten und höheren Grades vorgesehen ist.

5. System nach Anspruch 1, dadurch gekennzeichnet, daß das Modell (13,14;23,24) des Systemverhaltens Glieder zur Berücksichtigung der aerodynamischen Kräfte und Momente und des Gewichtes (14d;24d), der Trägheitskräfte bzw. -momente (14c;24c) und/oder der kinematischen Beziehungen (14e;24e) einschließt.

6. System nach Anspruch 1, dadurch gekennzeichnet, daß das Modell des Systemverhaltens ein Glied zur Bestimmung von inertialen Beschleunigungskräften einschließt, das mit geschätzten (14a;24a) und/oder gemessenen (14b;24b) Zustandsgrößen beaufschlagbar ist.

7. System nach Anspruch 1, dadurch gekennzeichnet, daß die Korrekturanordnung (18;28) mit gemessenen Größen der Drehgeschwindigkeiten und der Lagewinkel beaufschlagt ist und der Additionsstelle (15;25) der Ausgänge ($\underline{x}'_B,\underline{x}'_S$) der beiden Modelle vorgeschaltet ist.

8. System nach Anspruch 7, dadurch gekennzeichnet, daß die Korrekturanordnung (18) durch die Differenz von geschätzten und gemessenen Zustandsgrößen beaufschlagt ist.

9. System nach Anspruch 1, dadurch gekennzeichnet, daß die Korrekturanordnung ein erstes Korrekturglied (26) zwischen der Additionsstelle (25) und der Integrationsstufe (27) und ein zweites Korrekturglied (28) im Eingang der gemessenen Zustandsgrößen für die Drehgeschwindigkeit und die Lagewinkel aufweist.

10. System nach Anspruch 1, dadurch gekennzeichnet, daß zur Kompensation stationärer Modellfehler eine Schaltung (31,32) vorgesehen ist, die auf die Additionsstelle (15) zwischen den beiden Modellen (12,13/14) geschaltet ist und in die wenigstens eine geschätzte oder gemessene Komponente ($\hat{u}_A$, $\hat{v}_a$) der Fluggeschwindigkeit als Eingang aufgegeben wird.

11. System nach Anspruch 1, dadurch gekennzeichnet, daß zur Kompensation stationärer Modellfehler eine Schaltung (31,32) vorgesehen ist, die auf die Additionsstelle (15) zwischen den beiden Modellen (12,13/14) geschaltet ist und in der wenigstens eine gemessene oder geschätzte Größe der Lagewinkel oder Drehgeschwindigkeitskomponenten als Eingang wirken.

12. System nach Anspruch 10 oder 11, dadurch gekennzeichnet, daß die Schaltung wenigstens zwei parallele Zweige (31,32) aufweist.

13. System nach Anspruch 10, 11 oder 12, dadurch gekennzeichnet, daß die Schaltung eine Mehrzahl von parallelen Schaltungszweigen (31,32) mit Polynomen zweiten und höheren Grades aufweist.

14. System nach Anspruch 1, dadurch gekennzeichnet, daß den beiden Modellen (12,13/14;22,23/24) zusätzlich Signale des statischen Drucks ($p_s$) und der Umgebungstemperatur ($T_s$) als Korrekturfaktoren aufgegeben werden.

15. System nach einem der vorhergehenden Ansprüche, dadurch gekennzeichnet, daß bei bekannter barometrischer oder inertialer Vertikalgeschwindigkeitskomponente durch deren Vergleich mit der geschätzten Vertikalgeschwindigkeitskomponente ein Korrekturfaktor für die angenommene Hubschraubermasse ermittelt wird.

## Claims

1. System for determining the airspeed of helicopters using the cyclic and collective control signals and the attitude angles for pitch and roll attitude, characterized in that there is supplied a coupled measuring device (11; 21), to which are supplied the cyclic and collective control signals ($\delta_L,\delta_Q,\delta_K$), the attitude angles ($\Phi,\Theta$) and the rotational velocities (p, q, r) about the axes (x, y, z) of the helicopter and which contains the two models, namely

– a model (12; 22) of the input behaviour of the helicopter motion, on which the cyclic and collective control signals (6) act as input parameters and

– a model (13/14; 23/24) of the system behaviour of the helicopter, on which the condition parameters act as input parameters,

there is a correction arrangement (18; 26/28) for the measured parameters of the rotational velocity and the attitude angle, there is an integration stage (16), in which the estimated condition parameters ($\hat{x}$) are obtained by integration of the algebraic sum of

$$\dot{\hat{x}}$$

of the output signals ($x'_B$, $x'_S$) of the two models (12, 13/14; 22, 23/24) and the output signals of the correction arrangement (18; 26), said algebraic sum being formed in an addition position (15; 25), and there is an indication (19; 30) of the three estimated velocity components ($\hat{u}_A$, $\hat{v}_a$ und $\hat{w}_A$) for which the values are taken behind the integration stage (16; 29),

2. System according to claim 1, characterized in that the two models (12– 13/14; 22–23/24) can be adapted to the current flight condition by means of estimated condition parameters.

3. System according to claim 2, characterized in that at least one circuit is provided for the adaptation, proportional to velocity, of the two models (12–13; 22–23) to the current flight condition.

4. System according to claim 3, characterized in that one multiplicity of parallel circuits is provided whith polynomials of second and higher order.

5. System according to claim 1, characterized in that the model (13, 14; 23, 24) of the system behaviour includes terms to take account of the aerodynamic forces and moments of the weight (14d; 24d), of the inertia forces and moments (14c; 24c) and/or of the kinematic relationships (14e; 24e).

6. System according to claim 1, characterized in that the model of the system behaviour includes a term for determining inertial acceleration forces, which term can be subjected to estimated (14a; 24a) and/or measured (14b; 24b) condition parameters.

7. System according to claim 1, characterized in that the correction arrangement (18; 28) is subjected to measured parameters of the rotational velocities and the attitude angles and the addition position (15; 25) is connected in front of the outputs ($\underline{x}'_B, \underline{x}'_S$) of the two models.

8. System according to claim 7, characterized in that the correction arrangement (18) is subjected to the difference between the estimated and measured condition parameters.

9. System according to claim 1, characterized in that the correction arrangement has a first correction term (26) between the addition position (25) and the integration stage (27) and a second correction term (28) in the input of the measured condition parameters for the rotational velocities and the attitude angles.

10. System according to claim 1, characterized in that, for the compensation of steady state model errors, a circuit (31, 32) is provided which is connected onto the addition position (15) between the two models (12, 13/14) and in which at least one estimated or measured component ($\hat{u}_A$, $\hat{v}_a$) of the airspeed is supplied as input.

11. System according to claim 1, characterized in that, for the compensation of steady state model errors, a circuit (31, 32) is provided which is connected onto the addition position (15) between the two models (12, 13/14) and in which at least one measured or estimated parameter of the attitude angles or rotational velocity components act as input.

12. System according to claim 10 or 11, characterized in that the circuit has a multiplicity of parallel circuit branches (31, 32).

13. System according to claim 10, 11 or 12, characterized in that the circuit has a multiplicity of parallel circuit branches (31, 32) with polynomials of second or higher order.

14. System according to claim 1, characterized in that additional signals from the static pressure ($p_S$) and the ambient temperature ($T_S$) are supplied as correction factors to the two models (12, 13/14; 22, 23/24).

15. System according to one of the preceding claims, characterized in that, in the case of known barometric or inertial vertical velocity component, a correction factor for the assumed helicopter mass is determined by comparison with the estimated vertical velocity component.

**Revendications**

1. Système en vue de la détermination de la vitesse de vol d'hélicoptères par utilisation des signaux de commande cycliques et collectifs et de l'angle de position pour la position de tangage et la position de roulis, caractérisé par un dispositif de mesure couplé (11; 21), auquel sont délivrés les signaux de commande cycliques et collectifs ($\delta_L, \delta_Q, \delta_K$) et l'angle de position ($\phi$, $\theta$) ainsi que les vitesses de rotation (p, q, r) autour des axes (x, y, z) de l'hélicoptère et qui contient deux modèles, à savoir
   – un modèle (12; 22) du comportement d'entrée du mouvement de l'hélicoptère, sur lequel agissent les signaux de commande cycliques et collectifs (6) en tant que grandeurs d'entrée et
   – un modèle (13/14; 23/24) du comportement du système de l'hélicoptère, sur lequel agissent les grandeurs d'état en tant que grandeurs d'entrée,
   par un dispositif de correction (18; 26/28) pour les grandeurs de mesure de la vitesse de rotation et de l'angle de position, par un étage d'intégration (16), dans lequel sont obtenues les grandeurs d'état estimées ($\hat{\underline{x}}$) par intégration de la somme algébrique

$$\dot{\hat{\underline{x}}}$$

formée par intégration dans un point d'addition (15, 25) des signaux de sortie ($\underline{x}'_B$, $\underline{x}'_S$) des deux modèles (12, 13/14; 22, 23/24) et des signaux de sortie du dispositif de correction (18; 26) et par un affichage (19; 30) des trois composantes de vitesse estimées ($\hat{u}_A$, $\hat{v}_a$ und $\hat{w}_A$), pour lesquelles les valeurs sont prélevée derrière l'étage d'intégration (16; 29).

2. Système selon la revendication 1, caractérisé en ce que les deux modèles (12–13/14; 22–23/24) peuvent être adaptés par l'intermédiaire de grandeurs d'état estimées à l'état actuel du vol.

3. Système selon la revendication 2, caractérisé en ce qu'au moins un circuit, en vue de l'adaptation proportionelle à la vitesse des deux modèles (12–13; 22, 23) à l'état réel du vol, est prévu.

4. Système selon la revendication 3, caractérisé en ce qu'une pluralité de circuits en parallèle avec des polynômes du second ordre et plus est prévue.

5. Système selon la revendication 1, caractérisé en ce que le modèle (13, 14; 23, 24) du comportement du système comprend des éléments en vue de la prise en considération des forces et moments aérodynamiques et du poids (14d; 24d), des forces ou des moments d'inertie (14c; 24c) et/ou des relations cinématiques (14e; 24e).

6. Système selon la revendication 1, caractérisé en ce que le modèle du comportement du système comprend un élément en vue de la détermination de forces d'accélération d'inertie, qui peut être alimenté par les grandeurs d'état estimées (14a; 24a) et/ou mesurées (14b; 24b).

7. Système selon la revendication 1, caractérisé en ce que le dispositif de correction (18; 28) est alimenté par des valeurs mesurées des vitesses de rotation et de l'angle de position et est disposé en amont du point d'addition (15; 25) des sorties ($\underline{x}'_B$, $\underline{x}'_S$) des deux modèles.

8. Système selon la revendication 7, caractérisé en ce que le dispositif de correction (18) est alimenté par la différence de grandeurs d'état estimées et mesurées.

9. Système selon la revendication 1, caractérisé en ce que le dispositif de correction comporte un premier élément de correction (26) entre le point d'addition (25) et l'étage d'intégration (27) et un second élément de correction (28) à l'entrée des grandeurs d'état mesurées pour la vitesse de rotation et l'angle de position.

10. Système selon la revendication 1, caractérisé en ce qu'en vue de la compensation d'erreurs stationnaires de modèle est prévu un circuit (31, 32) qui est disposé sur le point d'addition (15) entre les deux modèles (12, 13/14) et auquel est appliquée, en tant qu'entrée, au moins une composante estimée ou mesurée ($\hat{u}_A$, $\hat{v}_a$) de la vitesse de vol.

11. Système selon la revendication 1, caractérisé en ce qu'en vue de la compensation d'erreurs stationnaires de modèle est prévu un circuit (31, 32), qui est monté sur le point d'addition (15) entre les deux modèles (12, 13/14) et dans lequel agissent au moins, en tant qu'entrée, une grandeur mesurée ou estimée de l'angle de position ou des composantes de vitesse de rotation.

12. Système selon la revendication 10 ou 11, caractérisé en ce que le circuit comporte au moins deux branches parallèles (31, 32).

13. Système selon la revendication 10, 11 ou 12, caractérisé en ce que le circuit comporte une pluralité de branches de circuit parallèles (31, 32) avec des polynômes du second ordre et plus.

14. Système selon la revendication 1, caractérisé en ce qu'aux deux modèles (12, 13/14; 22, 23/24) sont appliqués en outre des signaux de la pression statique ($p_s$) et de la température de l'environnement ($T_s$) en tant que facteurs de correction.

15. Système selon l'une quelconque des revendications précédentes, caractérisé en ce que, dans le cas de composantes verticales barométrique ou d'inertie, est détecté, par leur comparaison aux composantes de vitesse verticale estimées, un facteur de correction pour la masse supposée de l'hélicoptère.

# Fig. 1

**Fig. 2**

ROTORSCHUB

ROTORDREHUNG

HECKROTORSCHUB

$\psi_{Ro}$

KOPFMOMENT

SENSOREN FÜR
STATIKDRUCK
TEMPERATUR

WIDERSTAND

ABTRIEB DES
HÖHENLEITWERKS

GEWICHT

SENSOREN FÜR
STEUER- ODER
TAUMELSCHEIBEN-
STELLUNGEN

SENSOREN FÜR
DREHGESCHWINDIGKEITEN
LAGEWINKEL
BAHNGESCHWINDIGKEITEN

EP 0 249 848 B1

Fig. 3

EP 0 249 848 B1

# Fig. 4

Fig. 5

EP 0 249 848 B1